# EUROPEAN PATENT SPECIFICATION

(11) **EP 4 490 238 B1**
(45) Date of publication and mention of the grant of the patent: **30.07.2025**
(21) Application number: 23716374.6
(22) Date of filing: 24.02.2023
(51) Int. Cl.: C09D 11/101, C09D 11/037, C09D 11/50, C09D 11/03

(54) **UV-CURABLE INK COMPOSITION BASED ON RED-EMITTING QUANTUM DOTS, METHOD FOR DEPOSITING INK COMPOSITION AND LIGHT EMITTING DEVICE**
UV-HÄRTBARE TINTENZUSAMMENSETZUNG AUF BASIS ROTEMITTIERENDER QUANTENPUNKTE, VERFAHREN ZUR ABSCHEIDUNG EINER TINTENZUSAMMENSETZUNG UND LICHTEMITTIERENDE VORRICHTUNG
COMPOSITION D'ENCRE DURCISSABLE AUX UV BASÉE SUR DES POINTS QUANTIQUES ÉMETTANT DU ROUGE, PROCÉDÉ DE DÉPÔT DE COMPOSITION D'ENCRE ET DISPOSITIF ÉLECTROLUMINESCENT

(43) Date of publication of application: 15.01.2025
(73) Proprietor: QNA Technology S.A., 54-427 Wroclaw (PL)
(72) Inventor: CZARNECKA, Monika, 54-007 Wroclaw (PL); BANASIUK, Barbara, 53-615 Wroclaw (PL); SZYMANSKA, Marta, 52-437 Wroclaw (PL); ZIEBA, Maciej, 54-314 Wroclaw (PL); BANSKI, Mateusz, 52-231 Wroclaw (PL); PODHORODECKI, Artur, 53-235 Wroclaw (PL)
(74) Representative: AOMB Polska Sp. z.o.o.
(86) International application number: PCT/PL2023/050011
(87) International publication number: WO 2024/177522

(56) References cited:
- WO-A1-2017/185717
- CN-A- 111 505 904
- US-A1- 2022 195 294

## Description

The invention relates to a UV-curable ink composition comprising red-emitting quantum dots, a method for depositing the composition, a film obtained by a depositing a UV-curable composition and a light emitting device.

Document WO21116139A1 discloses the use of InP dots, functionalized with an acrylate derivative of succinic acid, for the preparation of an ink composition. In this case, 1,6-hexanedioldimethacrylate (HDDMA) is used as the bifunctional unit. These quantum dots have an emission range in the green region of the spectrum. There is no information about the quantum yield for the layer after curing.

Document WO21099985 describes an ink composition, wherein the composition contains a quantum dot and/or quantum dot dye, preferably about 10% by weight of the composition. The composition may include, among others: particularly preferably HDDA (relative to QD) or TPGDA (relative to dye). The documents does not describe the effect of the polymerization mixture on quantum yield before and after polymerization.

Document US2021009826 discloses an ink composition containing core/shell or core/shell/shell dots. The ink compositions contain a mixture of two mers in various combinations, with the minimum content of quantum dots being 10% by weight.

CN112646417A discloses a nanocomposite composition that can be applied by a printing or spin coating process. The obtained layer, after hardening, is characterized by uniform thickness, good charge transport and luminous efficiency. There is no comparison of the QY values before and after the ink polymerization process. Quantum dots are core/shell type dots, stabilized with oleylamine. The content of the quantum dots in the composition is 10% by mass. Additionally, CN111505904 might be cited.

Many examples of curable compositions comprising quantum dots have been disclosed in the prior art describing. However, there is no information about compositions that have high quantum yields in colloidal form and after curing. The high quantum yield is a particularly important parameter due to its application in optoelectronics.

The aim of the invention was to develop a UV-curable ink composition, containing red-emitting quantum dots, which exhibits high stability of quantum yield in colloidal form and after UV-curing (as a film). In addition, the aim is to obtain a composition that, after curing, is resistant to visible light for a long time and does not lose its optical properties. The obtained film forms a flexible and non-cracking layer, which can be used in the light emitting devices.

In the first aspect, the invention relates to a UV-curable ink composition comprising:
- Red-emitting quantum dots (in the range from 2 to 20 wt.% based on the total amount of the composition,
- 1,6-hexanediol diacrylate in the range from 23 to 71 wt.% based on the total amount of the composition,
- tri(propylene glycol) diacrylate in the range from 13 to 29 wt.% based on the total amount of the composition,
- 2-hydroxy-2-methylpropiophenone in the range from 1 to 5 wt.% based on the total amount of the composition,
- 1-hydroxycyclohexyl phenyl ketone in the range from 3 to 12 wt.% based on the total amount of the composition,
- diphenyl(2,4,6-trimethylbenzoyl)phosphine oxide in the range from 2 to 18% wt.% based on the total amount of the composition,

Preferably, the composition further comprises up to 3 wt.% of phenylbis(2,4,6-trimethylbenzoyl)phosphine oxide.

Preferably, the composition further comprises up to 6 wt.% of isobornyl acrylate.

Preferably, the core of a red-emitting quantum dots comprises cadmium or indium.

Preferably, the core of a red-emitting quantum dots is selected from the group consisting of CdSe, CdTe, CuInS and InP.

Preferably, the red-emitting quantum dots have an organic ligand on their surfaces, preferably 2-ethyl-1-hexanethiol and mono-2-(methacryloyloxy)ethyl succinate.

Preferably, the photoluminescence quantum yield of the composition comprising cadmium quantum dots is at least 75%.

Preferably, the photoluminescence quantum yield of the composition comprising indium quantum dots is at least 35%.

Preferably, the viscosity of the composition is at 20 °C in the range from 12 to 24 cP.

Preferably, the surface tension of the composition is at 20° C in the range from 27 to 36 mN/m.

Preferably, the composition absorb light having a maximum luminous peak wavelength is in the range from 621 to 652 nanometers.

Another aspect of the invention is a method for producing the UV-curable ink composition, the method comprising:
a) adding, at room temperature:
   - 1-hydroxycyclohexyl phenyl ketone,
   - diphenyl(2,4,6-trimethylbenzoyl)phosphine oxide, and
   - optionally phenylbis(2,4,6-trimethylbenzoyl)phosphine oxide,
   to a mixture of 1,6-hexanediol diacrylate and tri(propylene glycol) diacrylate,
b) adding the red-emitting quantum dots,
c) adding 2-hydroxy 2-methylpropiophenone,
d) optionally, adding isobornylacrylate,
e) stirring the resulting mixture for 2 h at 24°C (±1 °C).

Another aspect of the invention is a method for depositing a UV-curable ink composition, in which the ink composition is depositing in a straight line, onto a first substrate to form a film, and then the film is covered by a second substrate of the same size.

Preferably, the film is cured under a UV lamp for up to 5 minutes.

Preferably, the substrate is selected from the group consisting of glass and paper and also is selected from the group consisting polymers, such as polyethylene terephthalate, polyethylene glycol, polycarbonate, polystyrene and polyester.

Another aspect of the invention is a film that shows a maximum emission at the wavelength in the range from 650 to 656 nm and a decrease of a spectral irradiance is lower than 7.5% over a period of 135 hours.

Another aspect of the invention is a use of the UV-curable ink composition in a light emitting device, in particular in a light-emitting diode.

Another aspect of the invention is a light emitting device comprising the UV-curable ink composition wherein LED emission wavelength is 365 nm or 458 nm.

The advantage of the invention is the high stability of the quantum yield (QY) and the maximum of the photoluminescence (PL) over a very long time, both in the case of the composition in colloidal form and after UV-curing. In addition, the UV-cured ink films (layers) are flexible and resistant to visible light for a long time and do not lose their optical properties at room temperature and at elevated temperature - 90 °C. The cured layer is characterized by a quantum yield of min. 75% - in the case of cadmium quantum dots, and at least 30% in the case of indium quantum dots and maintain the stability of color emission. Moreover, stability of Full Width at Half Maximum (FWHM) emission parameter in a very long time, in the composition in colloidal form and in the case of UV-cured layers as well.

Another advantage of the invention is the repeatability of the composition preparation method as well as its universality. The composition, according to the invention can be prepared from various types of dots, not limited to cadmium or indium. Moreover, each step of the synthesis can be easily scaled-up, which is important from the point of view of industrial application.

The invention is presented on the drawing, in which:

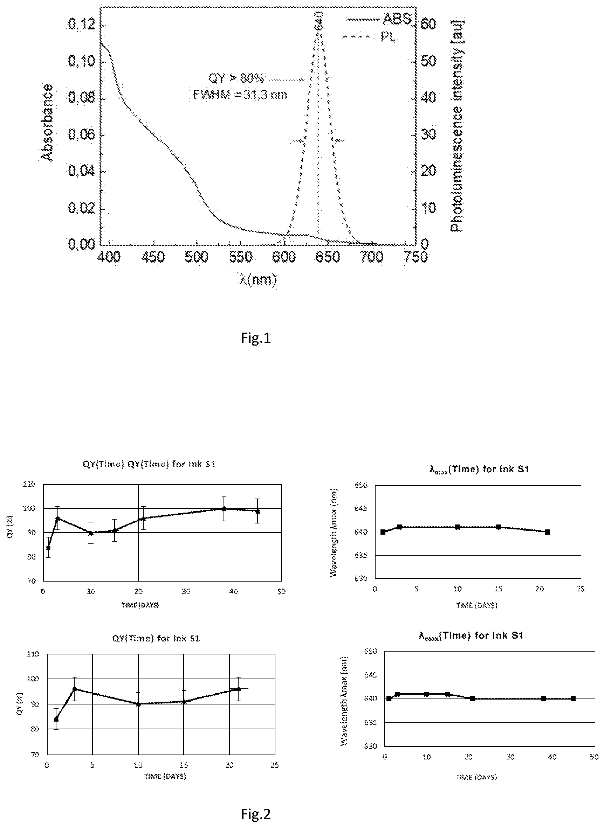

Fig. 1 presents Absorbance and Photoluminescence spectra of Ink S1.
Fig. 2 presents Quantum Yield and Wavelength max stability test at RT for Ink S1.

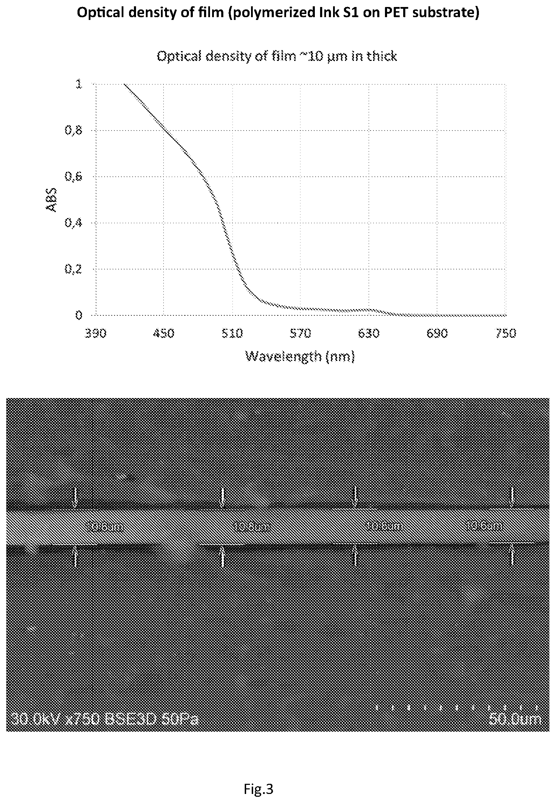

Fig. 3 presents Absorbance spectra of polymerized Ink S1 film deposited on PET substrate and the same film seen in cross section as an image from a scanning electron microscope (SEM). The thickness of film was determine to be 10.8 um, while Optical Density (OD) at 450 nm to be 0.8.

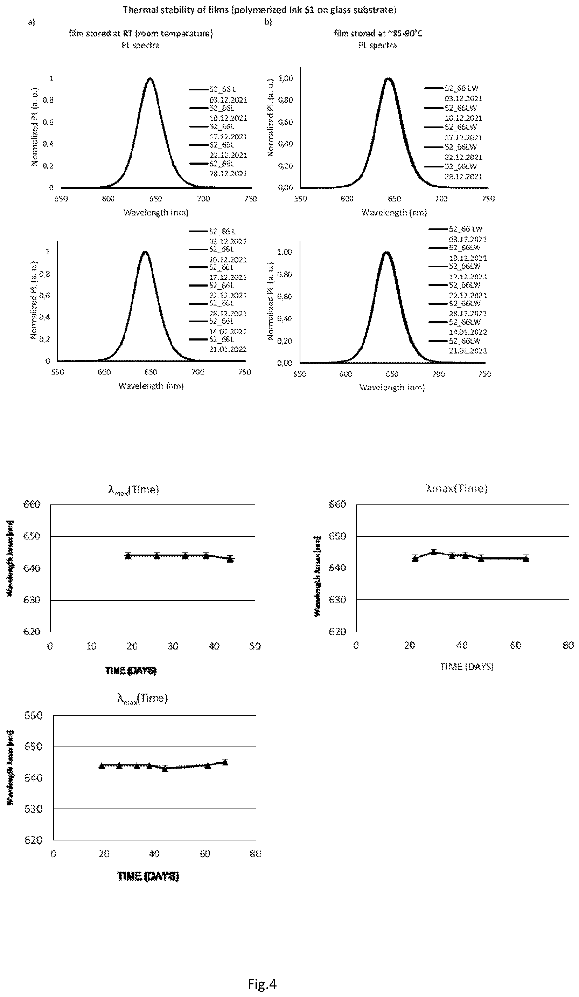

Fig. 4 presents Wavelength max stability test for films (polymerized Ink1 on glass substrate) stored at room temperature (a) as well as at 85-90 °C (b).

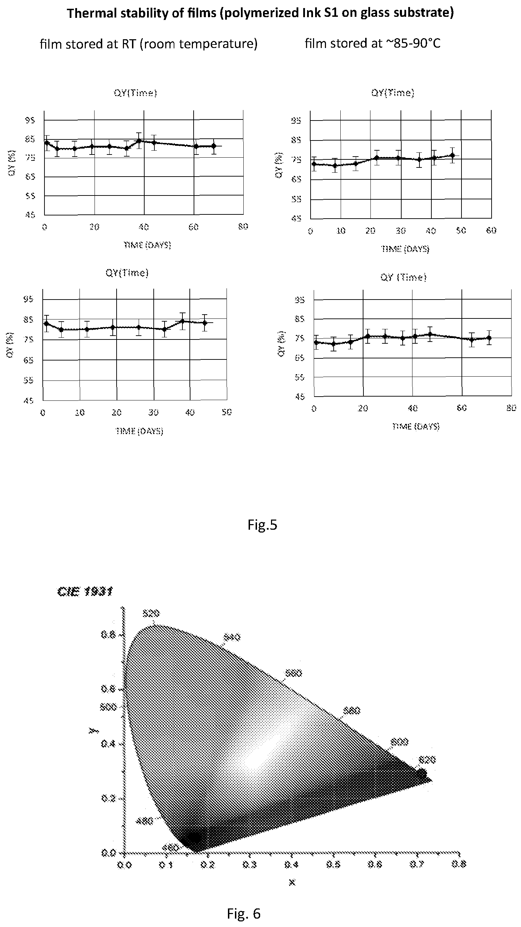

Fig. 5 presents quantum yield stability test for films (polymerized Ink S1 on glass substrate) stored at room temperature (a) as well as at 85-90 °C (b).
Fig. 6 presents CIE diagram drawn on the basis of the PL wavelength λₘₐₓ stability test. The computed coordinates did not change during the time of experiment.

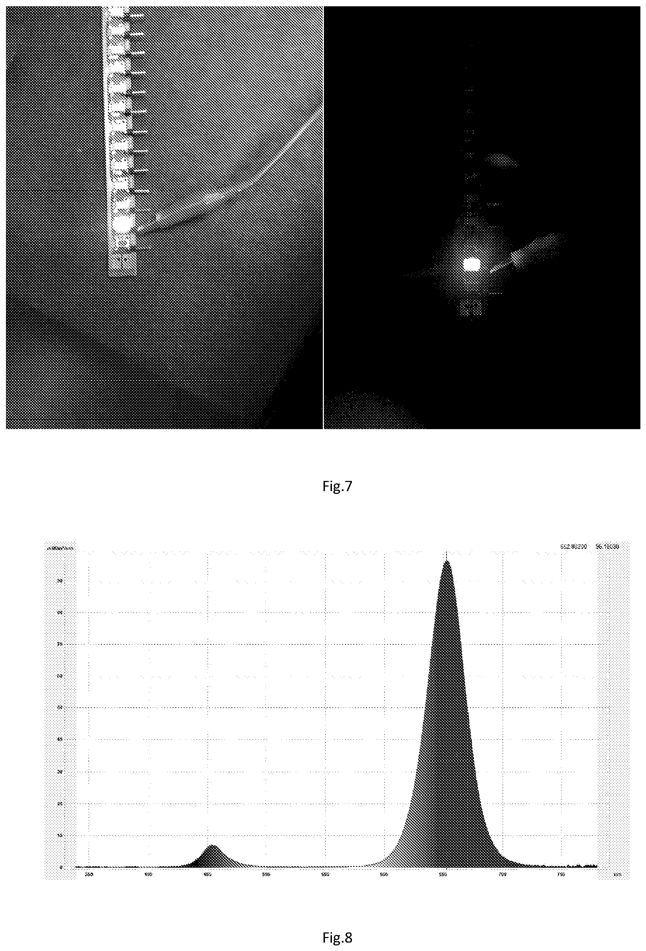

Fig 7. Presents the picture of red light emitting diode LITEON LTW-5630SD after UV-curable ink (Ink S1) deposition.
Fig 8. Presents Light emitting diode LITEON LTW-5630SD emission spectra after UV-curable ink (Ink S1) deposition. The peak with wavelength at 454 nm comes from the light source (LITEON LTW-5630SD) and the peak with wavelength at 652 nm is a QDs emission peak.

The invention is presented in non-limiting examples:
The synthesis of CdSe quantum dots was performed according to the procedure described in X. Peng, DOI 10.1007/s12274-013-0341-7. The CdSe cores were coated with an inorganic CdS shell by a reaction carried out according to a modified procedure originally proposed by Bawendi [Bawendi, Nature, DOI: 10.1038/NMAT3539].

The quantum dots based on InP - personalized High Efficiency Indium Phosphide Zinc Sulfide (InP/ZnS) Quantum Dots (HEINP) - are commercially available from NNCrystal US Corporation.

2-ethyl-1-hexanethiol, mono-2-(methacryloyloxy)ethyl succinate, PGMEA, 1-hydroxycyclohexyl phenyl ketone, diphenyl(2,4,6-trimethylbenzoyl)phosphine oxide, phenylbis(2,4,6-trimethylbenzoyl)phosphine oxide, 1,6-hexanediol diacrylate, tri(propylene glycol) diacrylate are commercially available.

Photoluminescence (PL) spectra were measured to determine the position and broadening (FWHM - Full Width at Half Maximum) of PL peak and quantum yield (QY) of PL. Absorbance spectra (ABS) were measured for Ink S1 as well as films which allows to determine the optical density of polymerized films.

Absorbance was measured on PerkinElmer LAMBDA 365 UV-Vis. Photoluminescence spectra and Photoluminescence Quantum Yield were measured on PerkinElmer FL 8500 Fluorescence Spectrophotometer. Excitation wavelength for PL and QY was set at 450 nm.

### Example 1

### The ligand exchange procedure:

### 1) The first step:

The procedure can be divided into two steps. In the first step 0,0043 mmol of 2-ethyl-1-hexanethiolwas added to the reaction vessel (centrifuge tube 50 mL) and then 0,1404 mmol of toluene was added using automatic pipette. 30 mL of QDs (concentration 20 mg/ml) was then transferred to the reaction vessel. Toluene or hexane may be used as a solvent for QDs. The reaction vessel was capped and placed a in a thermal shaker for 18 hours at 500 rpm and 30°C.

The second step of the procedure will begin after centrifugation. In the meantime, the quantum dots from the reaction mixture precipitated. Thus, acetonitrile should be added to the reaction vessel in a volume ratio of 1:1.5 (QDs:acetonitrile). Afterwards, the reaction vessel could be placed in a centrifuge for 10 minutes at 6000 rpm. After centrifugation, when complete precipitation occurs, the pellet can be separated from the supernatant by decanting the supernatant. Then the pellet should be carefully dried and dispersed in more less 0,1872 mmol of toluene. The second step of the ligand exchange procedure should be repeated twice.

The procedure described above is scalable.

### 2) The second step:

The procedure can be divided into two steps. In the first step 0,0154 mmol of mono-2-(methacryloyloxy)ethyl succinate was added to the reaction vessel (centrifuge tube 50 mL). PGMEA and toluene should be added to the reaction vessel using an automatic pipette: PGMEA and toluene in a volume ratio of 0.4:0.4:1 (PGMEA/toluene/QDs). 25 mL of QDs (concentration 20 mg/ml) was then transferred to the reaction vessel. Toluene or hexane may be used as a solvent for QDs. The reaction vessel was capped and placed a in a thermal shaker for 18 hours at 500 rpm and 30°C.

The second step of the procedure will begin after centrifugation. In the meantime, the quantum dots from the reaction mixture precipitated. Thus, octane should be added in a volume ratio of 1:2 (QDs:octane). Afterwards, the reaction vessel could be placed in a centrifuge for 10 minutes at 6000 rpm. After centrifugation, when complete precipitation occurs, the pellet can be separated from the supernatant by decanting the supernatant. Then the pellet should be carefully dried and dispersed in the mixture of HDDA:TPGDA in a volume ratio of 2.5:1.5 (total sample volume: 1 mL). The reaction vessel was once again capped and placed a in a thermal shaker for more or less 3 hours at 500 rpm and 30°C. The colloid should be filtered using a PAsyringe filter (0.2 µm) and transferred into a previously prepared vessel. The procedure described above is scalable.

### Example 2

### The UV-curable ink formulation

To prepare UV curable ink, 0,17 mmol of 1-hydroxycyclohexyl phenyl ketone, 0,22 mmol of diphenyl(2,4,6-trimethylbenzoyl)phosphine oxide and 0,01 mmol of phenylbis(2,4,6-trimethylbenzoyl)phosphine oxide were dissolved in 0,40 mmol of 1,6-hexanediol diacrylate and 0,11 mmol of tri(propylene glycol) diacrylate. The ingredients were mixed using vortex mixer for about 5 minutes at room temperature. Then, 202,7 ul (concentration about 400 mg/ml) of QDs dispersion from the previous procedure (Example 1) was added to the mixture. In the last step, 0,10 mmol of isobornyl acrylate and 0,10 mmol of 2-hydroxy-2metylpropiophenone were added to the mixture. The mixture was stirred for more or less 2h at 24°C and 500 rpm until complete dissolution of solid compounds. The UV-curable ink is ready to use. The procedure described above is scalable.

**Table 1. According to Example 2 have been obtained the following ink formulations:**

| | **Ink S1** | **Ink S2** | **Ink S3** |
|---|---|---|---|
| **QDs type** | **CdSe** | **InP** | **CdSe** |
| **COMPOUND** | **weight %** | **weight %** | **weight %** |
| QDs | 13,5 | 17,4 | 2 |
| 1,6-hexanediol diacrylate | 36,7 | 34,3 | 71 |
| tri(propylene glycol) diacrylate | 17,8 | 15,3 | 13 |
| isobornyl acrylate | 5 | 2 | 5 |
| diphenyl(2,4,6-trimethylbenzoyl)p hosphine oxide | 16 | 18 | 2 |
| 1-hydroxycyclohexyl phenyl ketone | 7 | 7 | 5 |
| 2-hydroxy-2-metylpropiopheno ne | 3 | 3 | 2 |
| phenylbis(2,4,6-trimethylbenzoyl)p hosphine oxide | 1 | 3 | 0 |

**Table 2. Parameters of ink formulations**

| **Parameter** | **Ink S1** | **Ink S2** |
|---|---|---|
| QY [%] | >80 | 35 |
| PL [nm] | 640 | 641,8 |
| FWHM [nm] | 31,3 | 43,2 |
| DLS (volume) | - | 13,35 |
| Surface tension [mN/m] | 30 | 29,9 |

### Example 3

### Method of deposition and curing UV-curable ink on glass and polymer substrates

4 ul of UV-curable ink was deposited on the substrate by using automatic pipette in a straight line. The substrate may be glass or a polymer (e.g. PET film) and measures approximately 4 x 1 cm. A second substrate of the same size is then carefully covered from above to uniformly distribute the ink over the entire surface of the substrate. Be careful not to create air bubbles. As a result, a thin UV-curable ink layer is created between two substrates of the same size. The resulting layer should be placed under a UV lamp (wavelength 365/395 nm) for 5 minutes.

**Table 3. Parameters of the UV-cured ink formulation**

| **Parameter** | **UV-cured Ink S1** | **UV-cured Ink S2** |
|---|---|---|
| QY [%] | >80 | 30 |
| PL [nm] | 643 | 641,8 |
| FWHM [nm] | 30,8 | 43 |

### Example 4

### Stability test for UV-cured ink formulation.

The test were performed at room temperature, samples were unprotected from visible light:

**Table 4. Stability test for UV-cured Ink S1 - sample A**

| **Days** | **QY [%] *** | **PL (max)** |
|---|---|---|
| 25 | 83 | - |
| 29 | 80 | - |
| 36 | 80 | - |
| 43 | 81 | 644 |
| 50 | 81 | 644 |
| 57 | 80 | 644 |
| 62 | 84 | 644 |
| 68 | 83 | 643 |
| 85 | 81 | 644 |
| 92 | 81 | 645 |
| 99 | 80 | 645 |
| 106 | 77 | 644 |
| 113 | 73 | 644 |
| 120 | 83 | 644 |
| 127 | 80 | 644 |
| 134 | 82 | 643 |
| 141 | 75 | 643 |
| 162 | 75 | 643 |
| 326 | 77 | 642,4 |
| 340 | 75 | 642,4 |
| 354 | 77 | 642,4 |
| 410 | 76 | 641 |

**Table 5. Stability test for UV-cured Ink S1 - sample B**

| **Days** | **QY [%]** | **PL (max)** |
|---|---|---|
| 7 | 77 | 642 |
| 13 | 80 | 640 |
| 30 | 77 | 643 |
| 37 | 78 | 644 |
| 44 | 77 | 644 |
| 51 | 76 | 643 |
| 58 | 77 | 644 |
| 65 | 84 | 642 |
| 72 | 84 | 641 |
| 79 | 83 | 641 |
| 86 | 81 | 641 |
| 107 | 77 | 641 |
| 121 | 80 | 641 |
| 271 | 79 | 640,5 |
| 285 | 80 | 640 |
| 299 | 80,5 | 640 |
| 355 | 80,2 | 640 |

Present invention, UV-curable ink formulation is used in optoelectronics, in particular as a displays, light emitting devices, photodetectors, anti-counterfeiting and photonics.

## Claims

1. A UV-curable ink composition comprising:
- Red-emitting quantum dots in the range from 2 to 20 wt.% based on the total amount of the composition,
- 1,6-hexanediol diacrylate in the range from 23 to 71 wt.% based on the total amount of the composition,
- tri(propylene glycol) diacrylate in the range from 13 to 29 wt.% based on the total amount of the composition,
- 2-hydroxy-2-methylpropiophenone in the range from 1 to 5 wt.% based on the total amount of the composition,
- 1-hydroxycyclohexyl phenyl ketone in the range from 3 to 12 wt.% based on the total amount of the composition,
- diphenyl(2,4,6-trimethylbenzoyl)phosphine oxide in the range from 2 to 18% wt.% based on the total amount of the composition,

2. The ink composition according to claim 1, **characterized in that** the composition further comprises up to 3 wt.% of phenylbis(2,4,6-trimethylbenzoyl)phosphine oxide.

3. The ink composition according to claim 1 or 2, **characterized in that** the composition further comprises up to 6 wt.% of isobornyl acrylate.

4. The ink composition according to any of claims 1 to 3, **characterized in that** the core of a red-emitting quantum dots comprise cadmium or indium, preferably selected from the group consisting of CdSe, CdTe, CuInS and InP

5. The ink composition according to any of claims 1 to 4, **characterized in that** the red-emitting quantum dots have an organic ligand on their surfaces, preferably 2-ethyl-1-hexanethiol and mono-2-(methacryloyloxy)ethyl succinate.

6. The ink composition according to any of claims 1 to 5, **characterized in that** the photoluminescence quantum yield of the composition comprising cadmium quantum dots is at least 75%.

7. The ink composition according to any of claims 1 to 6, **characterized in that** the viscosity of the composition is at 20 °C in the range from 12 to 24 cP (12 to 24 mPa*s).

8. The ink composition according to any of claims 1 to 7, **characterized in that** the composition absorb light having a maximum luminous peak wavelength is in the range from 621 to 652 nanometers.

9. A method for producing the UV-curable ink composition, according to any of claims 1 to 8, **characterized in that** the method comprising:
a) adding, at room temperature:
- 1-hydroxycyclohexyl phenyl ketone,
- diphenyl(2,4,6-trimethylbenzoyl)phosphine oxide, and
- optionally phenylbis(2,4,6-trimethylbenzoyl)phosphine oxide,
to a mixture of 1,6-hexanediol diacrylate and tri(propylene glycol) diacrylate,
b) adding the red-emitting quantum dots,
c) adding 2-hydroxy 2-methylpropiophenone,
d) optionally, adding isobornyl acrylate,
e) stirring the resulting mixture for 2 h at 24°C (±1 °C).

10. A method for depositing a UV-curable ink composition of any of claims 1 to 8, comprising depositing the ink composition in a straight line, onto a first substrate to form a film, and then the film is covered by a second substrate of the same size.

11. The method according to claim 10, **characterized in that** the film is cured under a UV lamp for up to 5 minutes.

12. The method according to claim 10 or 11, **characterized in that** the substrate is selected from the group consisting of glass and paper and also is selected from the group consisting polymers, such as polyethylene terephthalate, polyethylene glycol, polycarbonate, polystyrene and polyester.

13. A film obtainable by the method according to any of claims 10 to 12, **characterized in that**, the film shows a maximum emission at the wavelength in the range from 650 to 656 nm and a decrease of a spectral irradiance is lower than 7.5% over a period of 135 hours.

14. A use of the UV-curable ink composition according to any of claims 1 to 8, in a light emitting device, in particular in a light-emitting diode.

15. A light emitting device comprising the UV-curable ink composition according to any of claims 1 to 8, **characterized in that** LED emission wavelength is 365 nm or 458 nm

## Patentansprüche

1. UV-härtbare Tintenzusammensetzung, welche Folgendes umfasst:
- Rot-emittierende Quantenpunkte im Bereich von 2 bis 20 Gew.-%, bezogen auf die Gesamtmenge der Zusammensetzung,
- 1,6-Hexandioldiacrylat im Bereich von 23 bis 71 Gew.-%, bezogen auf die Gesamtmenge der Zusammensetzung,
- Tri(propylenglykol)-diacrylat im Bereich von 13 bis 29 Gew.-%, bezogen auf die Gesamtmenge der Zusammensetzung,
- 2-Hydroxy-2-methylpropiophenon im Bereich von 1 bis 5 Gew.-%, bezogen auf die Gesamtmenge der Zusammensetzung,
- 1-Hydroxycyclohexylphenylketon im Bereich von 3 bis 12 Gew.-%, bezogen auf die Gesamtmenge der Zusammensetzung,
- Diphenyl(2,4,6-trimethylbenzoyl)phosphinoxid im Bereich von 2 bis 18 Gew.-%, bezogen auf die Gesamtmenge der Zusammensetzung,

2. Die Tintenzusammensetzung nach Anspruch 1, **dadurch gekennzeichnet, dass** die Zusammensetzung außerdem bis zu 3 Gew.-% Phenylbis(2,4,6-trimethylbenzoyl)phosphinoxid enthält.

3. Die Tintenzusammensetzung nach Anspruch 1 oder 2, **dadurch gekennzeichnet, dass** die Zusammensetzung außerdem bis zu 6 Gew.-% Isobornylacrylat enthält.

4. Die Tintenzusammensetzung nach einem der Ansprüche 1 bis 3, **dadurch gekennzeichnet, dass** der Kern eines rot-emittierenden Quantenpunktes Cadmium oder Indium umfasst, vorzugsweise ausgewählt aus der Gruppe bestehend aus CdSe, CdTe, CuInS und InP

5. Die Tintenzusammensetzung nach einem der Ansprüche 1 bis 4, **dadurch gekennzeichnet, dass** die rot-emittierenden Quantenpunkte auf ihren Oberflächen einen organischen Liganden aufweisen, vorzugsweise 2-Ethyl-1-hexanthiol und Mono-2-(methacryloyloxy)ethylsuccinat.

6. Die Tintenzusammensetzung nach einem der Ansprüche 1 bis 5, **dadurch gekennzeichnet, dass** die Photolumineszenz-Quantenausbeute der Zusammensetzung, die Cadmium-Quantenpunkte enthält, mindestens 75 % beträgt.

7. Die Tintenzusammensetzung nach einem der Ansprüche 1 bis 6, **dadurch gekennzeichnet, dass** die Viskosität der Zusammensetzung bei 20 °C im Bereich von 12 bis 24 cP liegt.

8. Die Tintenzusammensetzung nach einem der Ansprüche 1 bis 7, **dadurch gekennzeichnet, dass** die Zusammensetzung Licht mit einer maximalen Lichtspitzen-Wellenlänge im Bereich von 621 bis 652 Nanometern absorbiert.

9. Ein Verfahren zur Herstellung der UV-härtbaren Tintenzusammensetzung nach einem der Ansprüche 1 bis 8, **dadurch gekennzeichnet, dass** das Verfahren Folgendes umfasst:
a) Zugabe, bei Raumtemperatur:
- 1-Hydroxycyclohexylphenylketon,
- Diphenyl(2,4,6-trimethylbenzoyl)phosphinoxid, und
- gegebenenfalls Phenylbis(2,4,6-trimethylbenzoyl)-phosphinoxid,
zu einer Mischung aus 1,6-Hexandioldiacrylat und Tri(propylenglykol)-diacrylat,
b) Zugabe der rot-emittierenden Quantenpunkte,
c) Zugabe von 2-Hydroxy-2-methylpropiophenon,
d) gegebenenfalls Zugabe von Isobornylacrylat,
e) Rühren der resultierenden Mischung für 2 Stunden bei 24°C (±1°C).

10. Ein Verfahren zum Aufbringen einer UV-härtbaren Tintenzusammensetzung nach einem der Ansprüche 1 bis 8, bei dem die Tintenzusammensetzung in einer geraden Linie auf ein erstes Substrat aufgebracht wird, um einen Film zu bilden, und der Film dann von einem zweiten Substrat derselben Größe bedeckt wird.

11. Das Verfahren nach Anspruch 10, **dadurch gekennzeichnet, dass** der Film unter einer UV-Lampe bis zu 5 Minuten lang gehärtet wird.

12. Das Verfahren nach Anspruch 10 oder 11, **dadurch gekennzeichnet, dass** das Substrat aus der Gruppe bestehend aus Glas und Papier ausgewählt ist und auch aus der Gruppe bestehend aus Polymeren, wie Polyethylenterephthalat, Polyethylenglykol, Polycarbonat, Polystyrol und Polyester ausgewählt ist.

13. Eine Folie, erhältlich durch das Verfahren nach einem der Ansprüche 10 bis 12, **dadurch gekennzeichnet, dass** die Folie ein Emissionsmaximum bei einer Wellenlänge im Bereich von 650 bis 656 nm aufweist und die Abnahme der spektralen Bestrahlungsstärke weniger als 7,5 % über einen Zeitraum von 135 Stunden beträgt.

14. Verwendung der UV-härtbaren Tintenzusammensetzung nach einem der Ansprüche 1 bis 8 in einem lichtemittierenden Gerät, insbesondere in einer lichtemittierenden Diode.

15. Ein lichtemittierendes Gerät, das die UV-härtbare Tintenzusammensetzung nach einem der Ansprüche 1 bis 8 enthält, **dadurch gekennzeichnet, dass** die Emissionswellenlänge der LED 365 nm oder 458 nm beträgt.

## Revendications

1. Une composition d'encre durcissable aux UV comprenant :
- Points quantiques émettant dans le rouge dans la gamme de 2 à 20 % en poids par rapport à la quantité totale de la composition,
- 1,6-hexanediol diacrylate dans la plage de 23 à 71 % en poids par rapport à la quantité totale de la composition,
- diacrylate de tri(propylène glycol) dans la plage de 13 à 29 % en poids par rapport à la quantité totale de la composition,
- 2-hydroxy-2-méthylpropiophénone dans la plage de 1 à 5 % en poids par rapport à la quantité totale de la composition,
- 1-hydroxycyclohexylphénylcétone dans la plage de 3 à 12 % en poids par rapport à la quantité totale de la composition,
- oxyde de diphényl(2,4,6-triméthylbenzoyl)phosphine dans la plage de 2 à 18 % en poids par rapport à la quantité totale de la composition,

2. La composition d'encre selon la revendication 1, **caractérisée en ce que** la composition comprend en outre jusqu'à 3 % en poids d'oxyde de phénylbis(2,4,6-triméthylbenzoyl)phosphine.

3. La composition d'encre selon la revendication 1 ou 2, **caractérisée en ce que** la composition comprend en outre jusqu'à 6 % en poids d'acrylate d'isobornyle.

4. La composition d'encre selon l'une quelconque des revendications 1 à 3, **caractérisée en ce que** le noyau des points quantiques émettant dans le rouge comprend du cadmium ou de l'indium, de préférence choisi dans le groupe constitué par CdSe, CdTe, CuInS et InP.

5. La composition d'encre selon l'une quelconque des revendications 1 à 4, **caractérisée en ce que** les points quantiques émettant dans le rouge ont un ligand organique à leur surface, de préférence le 2-éthyl-1-hexanethiol et le succinate de mono-2-(méthacryloyloxy)éthyle.

6. La composition d'encre selon l'une quelconque des revendications 1 à 5, **caractérisée en ce que** le rendement quantique de photoluminescence de la composition comprenant des points quantiques de cadmium est d'au moins 75 %.

7. La composition d'encre selon l'une quelconque des revendications 1 à 6, **caractérisée en ce que** la viscosité de la composition est comprise dans la plage de 12 à 24 cP à 20 °C.

8. La composition d'encre selon l'une quelconque des revendications 1 à 7, **caractérisée en ce que** la composition absorbe la lumière ayant une longueur d'onde de pic lumineux maximale dans la plage de 621 à 652 nanomètres.

9. Un procédé de fabrication d'une composition d'encre durcissable aux UV, selon l'une quelconque des revendications 1 à 8, **caractérisé en ce que** le procédé comprend :
a) addition, à température ambiante, de :
- 1-hydroxycyclohexyl phényl cétone,
- oxyde de diphényl(2,4,6-triméthylbenzoyl)phosphine et
- éventuellement oxyde de phénylbis(2,4,6-triméthylbenzoyl)phosphine, à un mélange de diacrylate de 1,6-hexanediol et de diacrylate de tri(propylène glycol),
b) addition de points quantiques émettant dans le rouge,
c) addition de 2-hydroxy-2-méthylpropiophénone,
d) éventuellement, addition d'acrylate d'isobornyle,
e) agitation du mélange obtenu pendant 2 h à 24°C (±1°C).

10. Un procédé pour déposer une composition d'encre durcissable aux UV selon l'une quelconque des revendications 1 à 8, comprenant le dépôt de la composition d'encre en ligne droite sur un premier substrat pour former un film, puis le film est recouvert par un second substrat de même taille.

11. Le procédé selon la revendication 10, **caractérisé en ce que** le film est durci sous une lampe UV pendant une durée maximale de 5 minutes.

12. Le procédé selon la revendication 10 ou 11, **caractérisé en ce que** le substrat est choisi parmi le groupe constitué du verre et du papier et est également choisi parmi le groupe constitué des polymères, tels que le polyéthylène téréphtalate, le polyéthylène glycol, le polycarbonate, le polystyrène et le polyester.

13. Un film pouvant être obtenu par le procédé selon l'une quelconque des revendications 10 à 12, **caractérisé en ce que** le film présente une émission maximale à une longueur d'onde comprise entre 650 et 656 nm et une diminution de l'irradiance spectrale inférieure à 7,5 % sur une période de 135 heures.

14. Une utilisation de la composition d'encre durcissable aux UV selon l'une quelconque des revendications 1 à 8, dans un dispositif émettant de la lumière, en particulier dans une diode électroluminescente.

15. Un dispositif émettant de la lumière comprenant la composition d'encre durcissable aux UV selon l'une quelconque des revendications 1 à 8, **caractérisé en ce que** la longueur d'onde d'émission de la LED est de 365 nm ou 458 nm.
